# EUROPÄISCHE PATENTANMELDUNG

(11) **EP 4 072 171 A1**
(43) Veröffentlichungstag der Anmeldung: **12.10.2022**
(21) Anmeldenummer: 22162379.6
(22) Anmeldetag: 16.03.2022
(51) Int. Cl.: H04W 4/38, H04L 67/12, H04W 80/02, H04W 84/12, H04L 9/40, H04W 12/06, H04W 84/18

(54) **VERFAHREN UND ÜBERTRAGUNGSVORRICHTUNG ZUR MOBILEN FUNKÜBERTRAGUNG VON MESSDATEN**

(30) Priorität: 06.04.2021 DE 102021108517
(71) Anmelder: Bender GmbH & Co. KG, 35305 Grünberg (DE)
(72) Erfinder: SEBEKOW, Michael, 35460 Staufenberg (DE); KREMER, Markus, 35305 Grünberg (DE)
(74) Vertreter: advotec.

(57) **Zusammenfassung**

Die Erfindung betrifft ein Verfahren und eine Übertragungsvorrichtung zur mobilen Funkübertragung von Messdaten, mit einem Sender und einem Empfänger, welche ein WiFi-Übertragungsverfahren nach dem Kommunikationsstandard IEEE 802.11 ausführen. Der Sender umfasst ein Wifi-Modul, welches konfiguriert ist zum Belegen eines Vendor-Specific-Elements eines Beacon-Rahmens mit Messdaten und zum Senden des Messdaten-Beacon-Rahmens. Der Empfänger umfasst ein weiteres Wifi-Modul, welches in einem Promiscuous-Mode operiert und konfiguriert ist zum Empfangen und Aufzeichnen aller Beacon-Rahmen, zum Herausfiltern des Messdaten-Beacon-Rahmens und zum Zuordnen des Messdaten-Beacon-Rahmens zu dem jeweiligen Sender.

## Beschreibung

Die Erfindung betrifft ein Verfahren zur mobilen Funkübertragung von Messdaten zwischen einem Sender und einem Empfänger, beruhend auf einem WiFi-Übertragungsverfahren nach dem Kommunikationsstandard IEEE-802.11 sowie eine aus einem Sender und einem Empfänger bestehende Übertragungsvorrichtung zur mobilen Funkübertragung von Messdaten, welche ein WiFi-Übertragungsverfahren nach dem Kommunikationsstandard IEEE-802.11 ausführt.

Neben Datenübertragungsverfahren, die, wie beispielsweise das Ethernet, für stationäre Datenquellen und -senken den Zugriff auf drahtgebundene Übertragungsmedien steuern, gewinnen für die Kommunikation zwischen mobilen Sendern und mobilen Empfängern drahtlose Funkübertragungstechniken zunehmend an Bedeutung. Als mögliche Standards bieten sich Mobilfunkstandards, wie beispielsweise 5G oder, insbesondere für lokale Anwendungen, WiFi-Übertragungsverfahren nach dem Kommunikationsstandard IEEE-802.11 (WLAN) an.

Für industrielle Anwendungen werden die von den Sendern (Sensoren) generierten Messdaten als Nutzdaten üblicherweise auf den anwendungsorientierten Protokollschichten des spezifizierten Kommunikationssystems in den Datenstrom eingebettet und mittels an den Übertragungskanal angepassten Übertragungsverfahren gesendet, um an zentraler Stelle zusammengeführt und verarbeitet zu werden.

Als nachteilig erweist sich hierbei die recht aufwendige Protokoll-spezifische Integration der Messdaten in den anwendungsorientierten Schichten sowie ein oftmals zu langsamer Verbindungsaufbau zwischen Sender und Empfänger. Insbesondere bei mobilen Anwendungen, wo sich Sender und Empfänger unter nicht-stationären Ausbreitungsbedingungen in einer Relativbewegung zueinander befinden und zudem die Kommunikationsdauer noch zeitlich begrenzt sein kann, erweist sich ein komplexer Verbindungsaufbau als hinderlich.

Der vorliegenden Erfindung liegt somit die Aufgabe zugrunde, ein Verfahren und eine Vorrichtung zur Übertragung von Messdaten zwischen dem Sender und dem Empfänger vorzuschlagen, wobei eine schnelle und zentrale Messdatenerfassung zwischen sich bewegendem Sender und Empfänger ermöglicht wird.

Diese Aufgabe wird gelöst mit einem Verfahren zur mobilen Funkübertragung von Messdaten zwischen einem Sender und einem Empfänger, beruhend auf einem WiFi-Übertragungsverfahren nach dem Kommunikationsstandard IEEE-802.11, durch Belegen eines Vendor-Specific-Elements eines Beacon-Rahmens mit den Messdaten in dem mit einem Wifi-Modul ausgestatteten Sender und Senden dieses Messdaten-Beacon-Rahmens, Empfangen und Aufzeichnen aller Beacon-Rahmen in dem mit einem weiteren Wifi-Modul ausgestatteten und in einem Promiscuous-Mode operierenden Empfänger und Herausfiltern des Messdaten-Beacon-Rahmens und Zuordnen zu dem jeweiligen Sender in dem Empfänger.

Der Grundgedanke der vorliegenden Erfindung beruht darauf, die Messdaten als Datenpakete als Inhalt von spezifizierten, optionalen Vendor-Specific-Elementen innerhalb eines spezifizierten Beacon-Frame-Formats des verwendeten WiFi-Übertragungsverfahrens nach dem Kommunikationsstandard IEEE-802.11 zu übertragen.

Bei der Datenübertragung zwischen dem Sender und dem Empfänger wird somit davon ausgegangen, dass in dem WiFi-Übertragungsverfahren spezifizierte Beacon-Frames übertragen werden. Die Beacon-Frames stellen eine spezielle Art (Subtype) eines spezifizierten WiFi MAC Layer Management Frames dar. Diese Beacon-Frames wiederum können optional Vendor-spezifische Informationselemente (Vendor-Specific-Elements) enthalten, die mit anwendungsspezifischen Daten aufgefüllt werden können (Beacon Stuffing). Die Vendor-Specific-Elements können somit in dem Sender mit den Messdaten als anwendungsspezifische Daten belegt und dann als Messdaten-Beacon-Rahmen versendet werden. Vorzugsweise werden pro Beacon-Frame maximal zwei Vendor-Specific-Elements mit den anwendungsspezifischen Messdaten belegt.

Der Empfänger ist ebenfalls mit einem WiFi-Modul ausgestattet, welches gemäß dem spezifizierten WiFi-Übertragungsverfahren in einem Promiscuous-Mode operiert und konfiguriert ist zum Empfangen und Aufzeichnen aller Beacon-Rahmen. Aufgrund des in dem Promiscuous-Mode arbeitenden WiFi-Moduls in dem Empfänger wird der gesamte ankommende Datenverkehr mitgelesen. Aus den empfangenen Beacon-Rahmen werden die Messdaten-Beacon-Rahmen herausgefiltert und dem jeweiligen Sender zugeordnet.

In weiterer Ausgestaltung wird die Datenintegrität der Messdaten mittels eines digitalen Signaturverfahrens geprüft.

Die Messdaten werden als Inhalt des Vendor-Specific-Elements in Klartext übertragen, allerdings mit einer digitalen Signatur unterschrieben, um die Unversehrtheit der Daten zu gewährleisten.

Weiterhin wird die Authentizität des Senders mittels eines asymmetrischen Kryptoverfahrens geprüft.

Um sicherzustellen, dass es sich bei dem Sender um ein vertrauenswürdiges Gerät handelt, kann der Empfänger - sofern eine Internetverbindung existiert - mit einem öffentlichen Schlüssel (Public Key Authentifizierung) die Geräteurheberschaft, somit den Sender der Messdaten, eindeutig authentifizieren.

Die der Erfindung zugrundeliegende Aufgabe wird weiterhin gelöst durch eine Übertragungsvorrichtung zur mobilen Funkübertragung von Messdaten, bestehend aus einem Sender und einem Empfänger, welche ein WiFi-Übertragungsverfahren nach dem Kommunikationsstandard IEEE-802.11 ausführen, wobei der Sender ein WiFi-Modul aufweist, welches konfiguriert ist zum Belegen eines Vendor-Specific-Elements eines Beacon-Rahmens mit den Messdaten und zum Senden des Messdaten-Beacon-Rahmens und wobei der Empfänger ein weiteres WiFi-Modul aufweist, welches in einem Promiscuous-Mode operiert und konfiguriert ist zum Empfangen und Aufzeichnen aller Beacon-Rahmen, zum Herausfiltern des Messdaten-Beacon-Rahmens und zum Zuordnen des Messdaten-Beacon-Rahmens zu dem jeweiligen Sender.

Die beanspruchten Merkmale der erfindungsgemäßen Übertragungsvorrichtung führen die entsprechenden Verfahrensschritte des erfindungsgemäßen Verfahrens aus. Somit treffen die für das Verfahren geltenden Vorteile gleichermaßen auch auf die Übertragungsvorrichtung zu.

Weitere vorteilhafte Ausgestaltungsmerkmale ergeben sich aus der nachfolgenden Beschreibung und den Zeichnungen, die eine bevorzugte Ausführungsform der Erfindung anhand von Beispielen erläutern.

Es zeigen:
- **Fig. 1**: eine Anwendung der erfindungsgemäßen Übertragungsvorrichtung,
- **Fig. 2**: eine Rahmenstruktur eines Management-Frames,
- **Fig. 3**: eine Rahmenstruktur eines Beacon-Frames und
- **Fig. 4**: eine Rahmenstruktur eines Vendor-Specific-Elements.

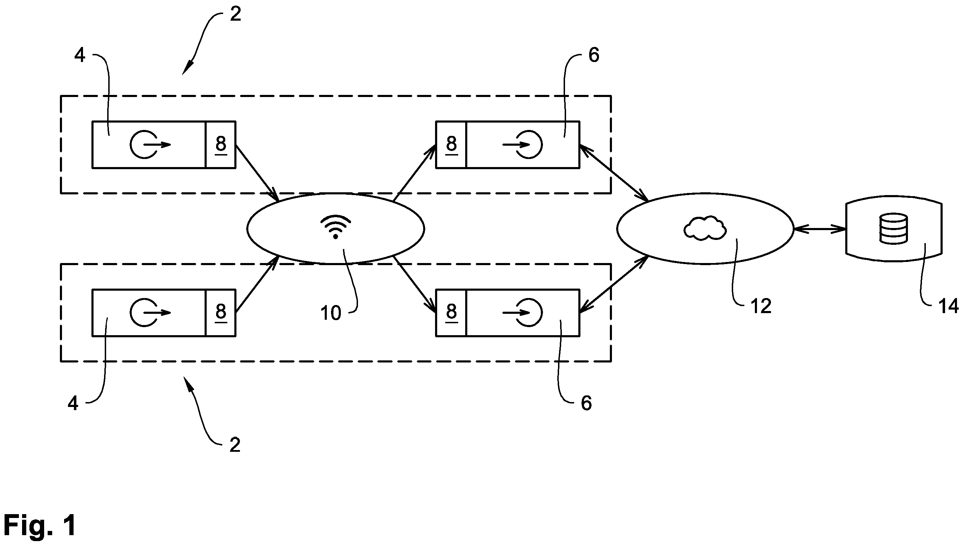

**Fig. 1** zeigt eine Anwendung der erfindungsgemäßen Übertragungsvorrichtung 2 in schematischer Darstellung.

Die Übertragungsvorrichtung 2 besteht aus einem Sender 4 und einem Empfänger 6. Sowohl der Sender 4 als auch der Empfänger 6 umfassen jeweils ein WiFi-Modul 8.

Der Sender ist vorzugsweise als Sensor zur messtechnischen Erfassung physikalischer Größen oder allgemein zur Erfassung von Prozessdaten ausgelegt.

In einer ersten Konstellation (obere Anordnung in Fig. 1) ist der Sender ortsfest angeordnet, wohingegen der Empfänger 6 ein mobiler Empfänger 6 ist. In diesem Fall soll beispielsweise eine Erfassung der Messdaten erfolgen, wenn sich der mobile Empfänger 6, beispielsweise in einer Ausführung als Tablet mit Applikationssoftware, an einem fest installierten Sensor 4 vorbeibewegt. Dabei kann eine Funkverbindung nur für eine begrenzte Zeitspanne möglich sein.

In einer zweiten Konstellation (untere Anordnung in Fig. 1) kommuniziert der mobile Sender 4 mit einem fest installierten Empfänger 6. In diesem Falle bewegt sich der mobile Sender 4 für eine begrenzte Zeitspanne an einem fest installierten Empfänger 6 vorbei.

Auch eine Kombination beider Anwendungsfälle mit mobilem Sender 4 und mobilem Empfänger 6 ist möglich.

Über das WiFi-Modul 8 kommunizieren der Sender 4 und der Empfänger 6 auf Basis eines WiFi-Übertragungsverfahrens 10.

Der Empfänger 6 verfügt zusätzlich über eine Internetverbindung 12, über die auf eine Datenbank 14 zugegriffen werden kann.

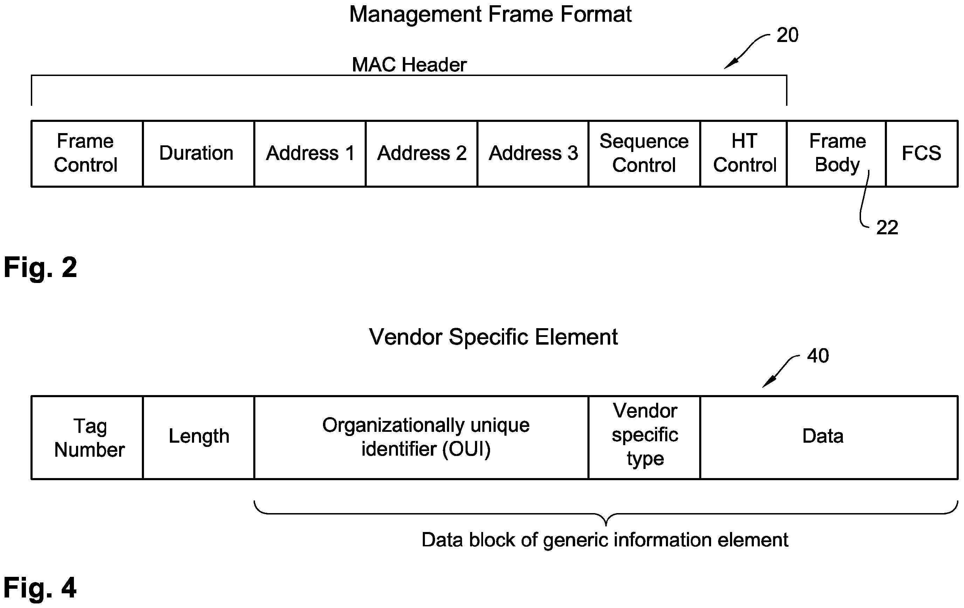

**Fig. 2** zeigt die Rahmenstruktur eines Management-Frame-Formats 20.

Der WiFi MAC Layer Management Frame 20 hat die Aufgabe, eine WiFi-Station (als Access Point) in der Umgebung sichtbar zu machen.

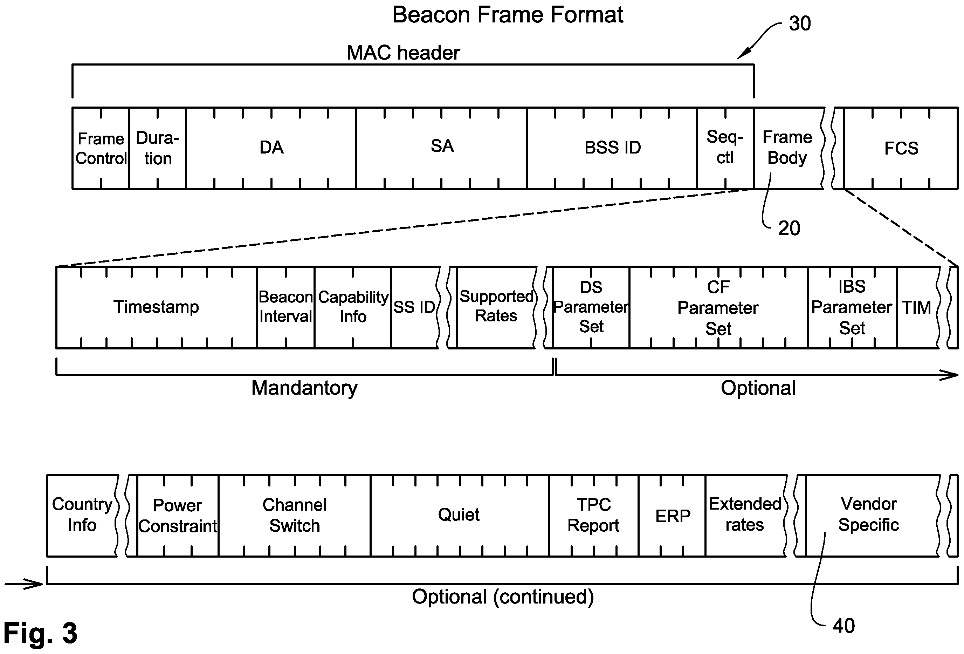

Ein Subtyp des Management-Frames 20 vom Typ Beacon-Frame 30 ist mit seiner Rahmenstruktur in **Fig. 3** dargestellt.

Der Subtyp Beacon-Frame 30 weist ein variables Datenfeld Frame-Body 22 auf, welches wiederum optionale Datenfelder variabler Länge, nämlich die Vendor-Specific-Elements 40, aufweisen.

Ein derartiges Vendor-Specific-Element 40 (Vendor-spezifische Informationselemente) zeigt **Fig. 4****.**

Diese Vendor-spezifischen Informationselemente 40 können mit anwendungsspezifischen Daten belegt werden. Im vorliegenden Fall werden die von dem Sender 4 erfassten Messdaten in dem Vendor-Specific-Element 40 abgelegt. Pro Beacon-Frame 30 können bis zu zwei Vendor-Specific-Elements 40 verwendet werden. Jedes dieser Vendor-Specific-Elements 40 kann bis zu 252 Bytes Daten beinhalten. Es sind somit bei zwei Vendor Spezifischen Elementen 40 maximal 504 Bytes verfügbar. In diesem Fall ist ein Vendor-Specific-Element 40 für die Messdaten und das andere für sicherheitsrelevante Daten vorgesehen.

## Patentansprüche

1. Verfahren zur mobilen Funkübertragung von Messdaten zwischen einem Sender (4) und einem Empfänger (6), beruhend auf einem Wi-Fi-Übertragungsverfahren (10) nach dem Kommunikationsstandard IEEE-802.11, umfassend die Verfahrensschritte:
Belegen eines Vendor-Specific-Elements (40) eines Beacon-Rahmens (30) mit den Messdaten in dem mit einem Wifi-Modul (8) ausgestatteten Sender (4) und Senden dieses Messdaten-Beacon-Rahmens (30), Empfangen und Aufzeichnen aller Beacon-Rahmen (30) in dem mit einem weiteren Wifi-Modul (8) ausgestatteten und in einem Promiscuous-Mode operierenden Empfänger (6) und
Herausfiltern des Messdaten-Beacon-Rahmens (30) und Zuordnen zu dem jeweiligen Sender (4) in dem Empfänger (6).

2. Verfahren nach Anspruch 1,
**dadurch gekennzeichnet,**
**dass** die Datenintegrität der Messdaten mittels eines digitalen Signaturverfahrens geprüft wird.

3. Verfahren nach Anspruch 1 oder 2,
**dadurch gekennzeichnet,**
**dass** die Authentizität des Senders (4) mittels eines asymmetrischen Kryptoverfahrens geprüft wird.

4. Übertragungsvorrichtung (2) zur mobilen Funkübertragung von Messdaten, bestehend aus einem Sender (4) und einem Empfänger (6), welche ein WiFi-Übertragungsverfahren (10) nach dem Kommunikationsstandard IEEE-802.11 ausführt, wobei der Sender (4) ein Wifi-Modul (8) aufweist, welches konfiguriert ist zum Belegen eines Vendor-Specific-Elements (40) eines Beacon-Rahmens (30) mit den Messdaten und zum Senden des Messdaten-Beacon-Rahmens (30),
der Empfänger (6) ein weiteres Wifi-Modul (8) aufweist, welches in einem Promiscuous-Mode operiert und konfiguriert ist zum Empfangen und Aufzeichnen aller Beacon-Rahmen (30), zum Herausfiltern des Messdaten-Beacon-Rahmens (30) und zum Zuordnen des Messdaten-Beacon-Rahmens (30) zu dem jeweiligen Sender (4).

5. Übertragungsvorrichtung nach Anspruch 4,
**gekennzeichnet durch**
eine Konfiguration zum Überprüfen der Datenintegrität der Messdaten mittels eines digitalen Signaturverfahrens.

6. Übertragungsvorrichtung nach Anspruch 4 oder 5,
**gekennzeichnet durch**
eine Konfiguration zum Überprüfen der Authentizität des Senders (4) mittels eines asymmetrischen Kryptoverfahrens.
